# EUROPEAN PATENT SPECIFICATION

(11) **EP 3 407 443 B1**
(45) Date of publication and mention of the grant of the patent: **28.04.2021**
(21) Application number: 18173419.5
(22) Date of filing: 21.05.2018
(51) Int. Cl.: H02G 3/12

(54) **FLUSH-MOUNTING BOX FOR TOUCH SCREEN DEVICES AND FLUSH-MOUNTING TOUCH SCREEN ASSEMBLY COMPRISING SAID BOX**
UNTERPUTZDOSE FÜR TOUCHSCREEN-GERÄT
BOÎTE DE MONTAGE POUR APPAREIL À ÉCRAN TACTILE

(30) Priority: 22.05.2017 IT 201700055124
(43) Date of publication of application: 28.11.2018
(73) Proprietor: Bticino S.p.A., 21100 Varese (IT)
(72) Inventor: BRAGHINI, Roberto, 21100 VARESE (IT); ANGHILERI, Andrea, 21100 VARESE (IT)
(74) Representative: Biallo, Dario

(56) References cited:
- DE-A1-102012 103 145
- DE-B3-102011 053 625
- Legrand: "Batibox - Boîte d'encastrement", , 23 January 2007 (2007-01-23), XP055507517, Retrieved from the Internet: URL:http://documentation.mb-expansion.fr/m aeva/pdf/LEGR04/ft_LEGR04_080126.pdf [retrieved on 2018-09-17]
- Thomas & Betts: "Weatherproof Corner Box from Thomas & Betts International Inc", , 2 March 2014 (2014-03-02), XP055443577, New Delhi Retrieved from the Internet: URL:http://www.tnb.ca/en/fichier/whatsnews ousmenu/SC5SQUAREBOX-E.pdf [retrieved on 2018-01-23]

## Description

The present invention relates to a flush-mounting box for touch-screen devices and a touch-screen assembly particularly but not exclusively usable in the sector of domotics.

As is well known, touch-screen devices today are commonly integrated in domotic systems. Generally, such devices are used to command, control, monitor the operation of the devices connected to the domotic system, for example video intercoms, tv cameras, temperature sensors, motion sensors and so on. In practice, touch-screen devices perform the user interface function.

Such touch-screen devices comprise a display screen or panel mounted on a support frame coupled to a casing which encloses an electronic board associated with the screen and provided with electronic components and circuits adapted to implement the functionalities of the touch-screen device, such as proximity sensors and a microprocessor.

Typically, the touch-screen devices thus made can be coupled to a bracket for fastening to a wall; in this case, the correct square positioning of the touch-screen device depends on the fastening of the bracket on the wall. Said bracket can also be fastened to a flush-mounting box integrated in a wall at a determined distance from the bottom wall of the same box. The box is flush-mounted in such a way that then the touch-screen device results to be protruding with respect to the surface of the wall and is easy to couple to or uncouple from the bracket. However, the adjustment of the depth at which the box is to be embedded is very approximate and not much precise. An error of a few millimetres in the construction of the housing seat for the box is sufficient to cause that the touch-screen device results to be difficult to couple or not coupable with the bracket. Document Legrand, "Batibox - Boite d'encastrement", (20070123) URL: http://documentation.mb-expansion.fr/maeva/pdf/LEGR04/ ft_LEGR04_080126.pdf, (20180917), XP055507517 describes a flush mounting box with a plurality of support elements extending cantilevered with respect to the bottom wall and additional spacer elements. Document Thomas & Betts "Waterproof Corner Box from Thomas & Betts International Inc", New Dehli, 820140302), URL: http://www.tnb.ca/en/ fichier/whatsnewsousmenu/SC5SQUAREBOX-E.pdf, (20180123), XP055443577 discloses an electrical box with internal spacers.

A purpose of the present invention is overcome the aforementioned drawbacks and in particular to devise a flush-mounting box for touch-screen devices and a flush-mounting touch-screen assembly that allow to regulate the recess depth so as to allow the installation of a touch-screen device in a convenient and easy manner and coupling with the touch-screen device.

This and other purposes according to the present invention are achieved by realising a flush-mounting box for touch-screen devices as disclosed in independent claim 1.

Further features of the flush-mounting box and of the flush-mounting touch-screen assembly are objects of the dependent claims.

The features and advantages of a flush-mounting box for touch-screen devices and of a flush-mounting touch-screen assembly according to the present invention shall become more readily apparent from the following exemplifying and non-limiting description, referred to the accompanying schematic drawings, in which:
- figure 1 is a partially exploded perspective schematic view of a flush-mounting touch-screen assembly according to the present invention;

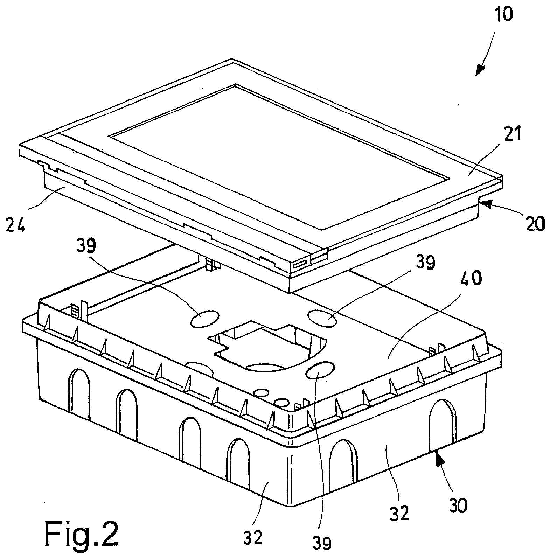

- figure 2 is a partially assembled perspective schematic view of the flush-mounting touch-screen assembly of figure 1;
- figure 3 is a view of a detail that is circled in figure 2;
- figure 4 is a partially exploded perspective schematic view of a bracket of the flush-mounting touch-screen assembly of figure 1 and 2;
- figure 5 is a side schematic view of the flush-mounting touch-screen assembly of figure 1 and 2 in mounting configuration;
- figure 6 is a partially exploded perspective schematic view of a flush-mounting box in a first configuration of the present invention;
- figure 7 is a partially exploded perspective schematic view of the flush-mounting box of figure 6 in a second configuration of the present invention;
- figures 8a and 8b are two schematic views of the circled detail of figure 7 in two alternative positions;
- figure 9 is a partially exploded perspective schematic view of an alternative embodiment of the flush-mounting box of the flush-mounting touch-screen assembly according to the present invention.

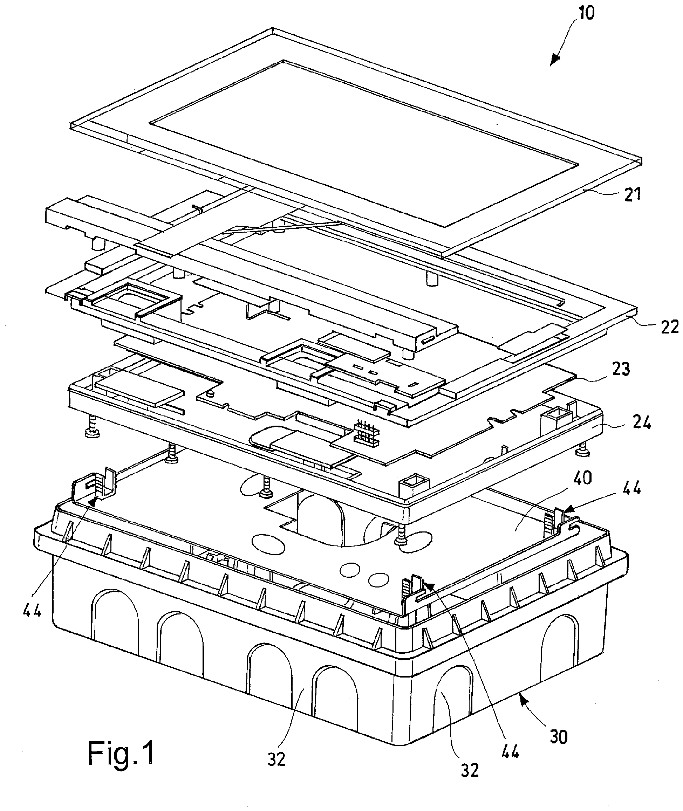

With reference to the figures, a flush-mounting touch-screen assembly, overall indicated with the reference number 10, is shown. Said flush-mounting touch-screen assembly 10 comprises a touch-screen device 20 which in turn comprises a display screen or panel 21 associated directly or indirectly with a casing 24. In particular, as can be observed in Figure 1, the display screen 21 can be mounted on a support frame 22 and associated with an electronic board 23, a so-called Printed Circuit Board (PCB), provided with electronic components and circuits adapted to implement the functionalities of the touch-screen device, such as the proximity sensors and a microprocessor. The casing 24 can be coupled to the support frame 22 posteriorly to the display screen so as to enclosed and protect the electronic board 23.

The flush-mounting touch-screen assembly 10 also comprises an open flush-mounting box 30 adapted to be flush-mounted in a wall and having a bottom wall 31 and lateral walls 32, in which the bottom wall 31 has a plurality of support elements 33, 43 which extend cantilevered with respect to the bottom wall internally to the box volume. The support elements 33, 43, in particular, define a first support plane.

The flush-mounting touch-screen assembly 10 also comprises a bracket 40 for the installation of the touch-screen device 20 adapted to be coupled to the flush-mounting box 30 and to the touch-screen device 20. In particular, when, in a mounting configuration, the bracket 40 is coupled to the flush-mounting boxe 30 rests on the plurality of support elements 33, 43, in particular resting on the first support plane. According to the present invention, the flush-mounting box 30 has a plurality of spacer elements 34 coupled removably to said box 30; in particular, said spacer elements 34 are arranged to be grasped and subsequently reversibly coupled above respective support elements 33, 43 defining a second support plane substantially parallel and positioned at a predetermined distance from said first support plane.

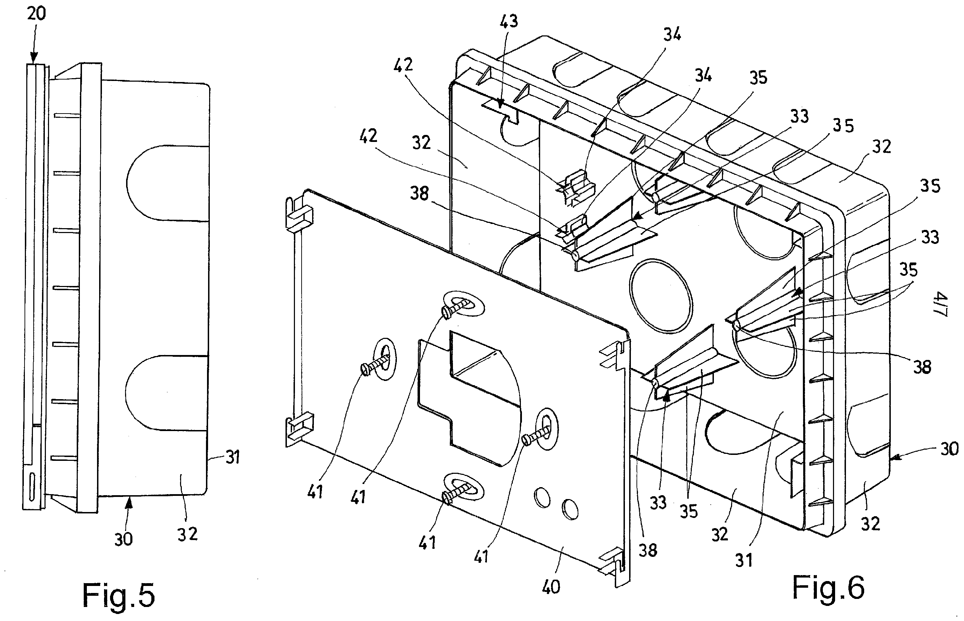

The spacer elements 34 are removably coupled to the bottom wall 31, as shown in figure 6. Preferably, moreover, the spacer elements 34 are shaped so as to be able to be coupled to the support elements 33 according to at least two alternative coupling positions in which the spacer elements 34 define two respective distances of predefined lengths, different from each other, between the first support plane and the second support plane.

Preferably, the plurality of support elements 33 comprises at least two column elements 33 each of which is provided with a plurality of lateral projections 35. In this case each spacer element 34 has a plurality of first seats 36 and a plurality of second seats 37 opposite to the first seats 36. The first seats 36 and the second seats 37 are arranged to engage reversibly with respective lateral projections 35 defining respectively a first coupling position and a second coupling position.

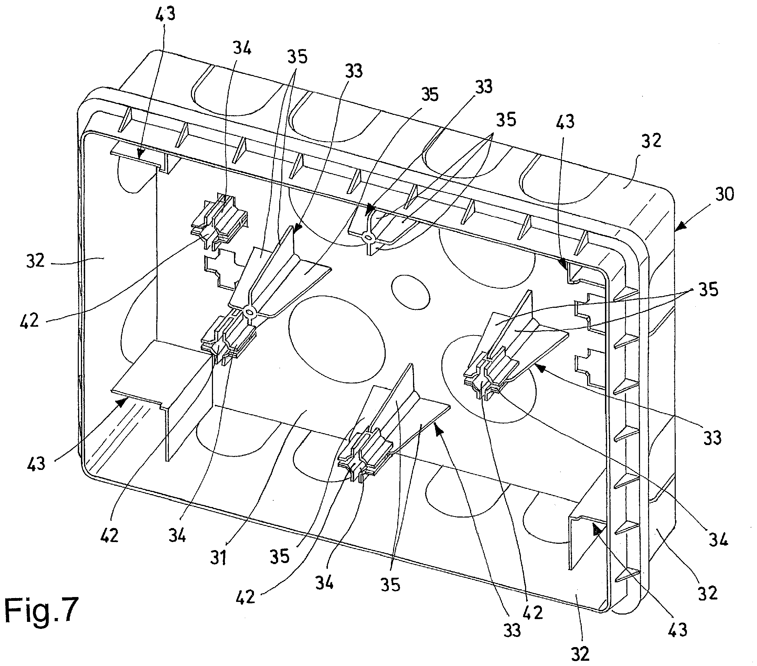

In the particular embodiment shown in figure 7, there are four column elements 33, placed on the bottom wall 31 in symmetrical positions with respect to the axes of symmetry of said bottom wall 31. As can be observed in figure 7, there are four lateral projections 35 of each column element 33, shaped as fins and arranged in a cross.

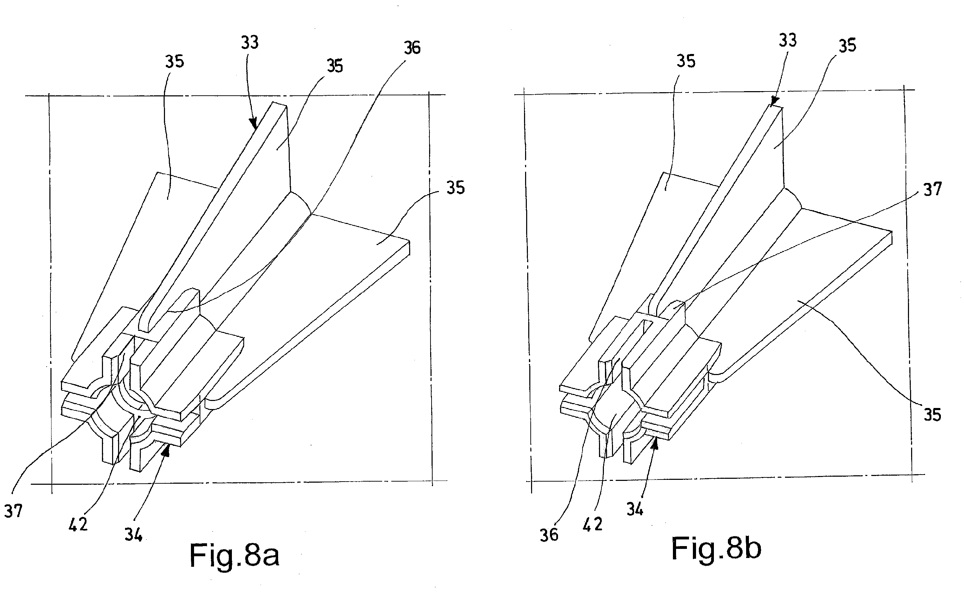

In this case, as shown in figure 8a and 8b the lateral projections 35 engage in the first seats 36 defining a first coupling position and in the second seats 37 defining a second coupling position.

As can be observed in the illustrated embodiments, each column element 33, preferably, has an internally threaded central bush portion 38 and, in corresponding position, the bracket 40 has a plurality of openings 39 to allow the coupling of the bracket 40 itself to the flush-mounting box 30 by means of fastening screws 41 which are engaged in said central bush portion 38.

In this case, each spacer element 34 has a through central portion 42 from which extend peripheral portions in which are realised the first seats 36 and second seats 37 so that the fastening screws 41 can traverse the spacer elements 34 when they are coupled to the column elements 33.

In addition or alternatively to the column elements 33, the support elements 32 can comprise a plurality of corner elements 43.

If both the column elements 33 and the corner elements are present, the support of the bracket 40 is more stable.

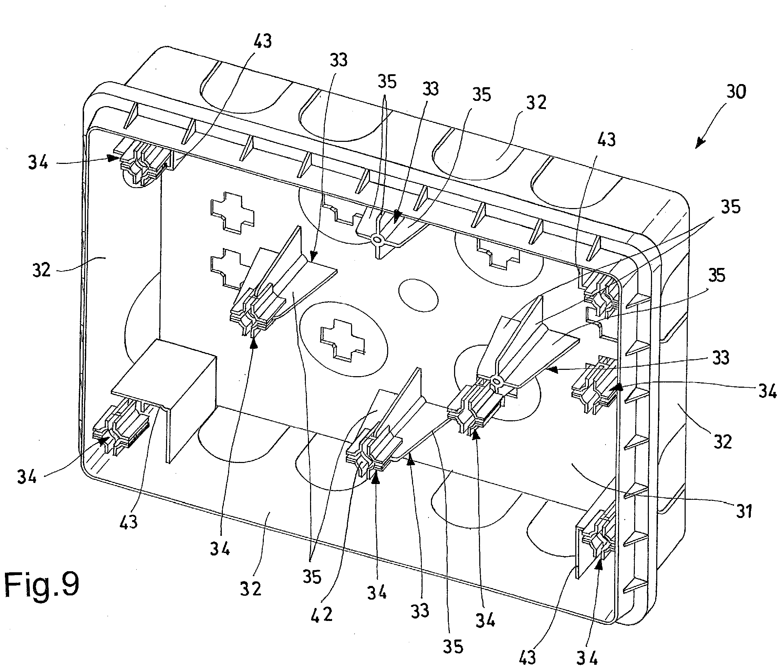

In this case, preferably, the number of the spacer elements 34 is equal to the sum of the column elements 33 and of the corner elements 43, as shown for example in figure 9.

Preferably, the bracket 40 is provided with a plurality of clip elements 44 and, in corresponding positions, the casing 24 of the touch-screen device has a plurality of engagement seats (not shown); the clip elements 44 and the engagement seats of the casing 24 are arranged to engage into each other.

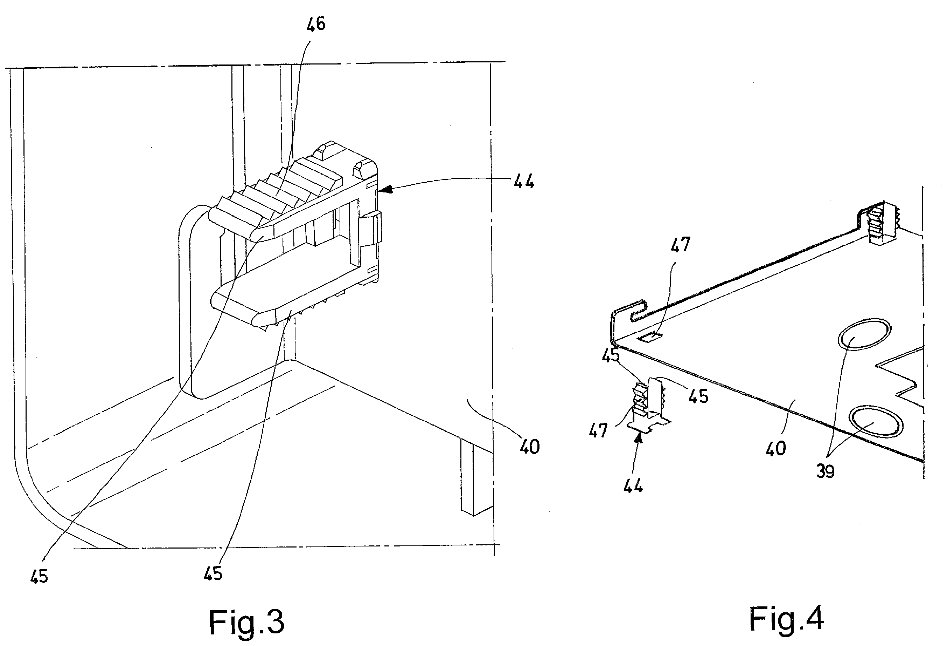

Preferably, each of the clip elements 44 have, as in the embodiment shown in particular in figures 3 and 4, two fins 45 provided with serrated teeth 46 adapted to make the snap engagement in the engagement seats.

In this case, the clip elements 44 can couple to respective through openings 47 of the bracket 40 so that the fins 45 traverse said through openings 47 and protrude towards the exterior of the flush-mounting box 30.

In this way, once the flush-mounting box 30 is installed in the wall with any spacer elements 34 coupled to the support elements 33, 43, the bracket 40 is fastened to the flush-mounting box 30 and subsequently the touch-screen device 20 is coupled to the bracket 40 by pushing said device against the clip elements 44 in such a way as to make the snap engagement.

The serrated teeth 46 allow to progressively approach in discrete steps the touch-screen device 20 to the bracket 40. In this way, a further adjustment of the recess of the touch-screen device 20 can be carried out.

From the description, the features of the flush-mounting box and of the flush-mounting touch-screen assembly object of the present invention are clear, and the related advantages are clear as well.

In fact, the spacer elements can assume different coupling positions with the support elements determining a different positioning of the support plane of the bracket for the fastening of the touch-screen device. In this way, the positioning of the touch-screen device can be adjusted in a convenient, simple and effective manner, allowing it to be mounted and dismounted easily.

Moreover, the clip elements can contribute to the aforesaid adjustment and enable a convenient and simple coupling of the touch-screen device in a recessed position.

Lastly, it is clear that the flush-mounting box and the flush-mounting touch-screen assembly thus conceived are susceptible to numerous modifications and variants; moreover, all details can be replaced by technically equivalent elements. In practice, the materials used, as well as their dimensions, can be of any type according to the technical requirements.

## Claims

1. Flush-mounting box (30) for touch screen devices adapted to be flush-mounted into a wall and having a bottom wall (31) and side walls (32) which define a box volume, said bottom wall (31) having a plurality of support elements (33, 43) extending cantilevered with respect to said bottom wall (31) inside said box volume, said support elements (33, 43) defining a first support plane for a bracket (40) for the installation of a touch screen device, said flush-mounting box (30) comprising a plurality of spacer elements (34) removably coupled to said flush-mounting box (30), said spacer elements 34 being removably coupled to said bottom wall 31, said flush-mounting box (30) being **characterised in that** said spacer elements (34) are arranged to be grasped and subsequently reversibly coupled above respective support elements (33, 43) defining a second support plane parallel with and placed at a predetermined distance from said first support plane.

2. Flush-mounting box (30) according to claim 1 wherein said spacer elements (34) are shaped so as to be able to be coupled to said support elements (33, 43) according to at least two alternative coupling positions wherein said spacer elements (34) define two respective distances of different predefined lengths between said first support plane and said second support plane.

3. Flush-mounting box (30) according to one of the preceding claims wherein said plurality of support elements (33, 43) comprises at least two column elements (33) each of which is provided with a plurality of lateral projections (35), each spacer element (34) of said spacer elements (34) has a plurality of first seats (36) and a plurality of second seats (37) opposite said first seats (36), said first seats (36) and said second seats (37) being arranged to be reversibly engaged with respective lateral projections (35) defining a first coupling position and a second coupling position, respectively.

4. Flush-mounting box (30) according to claim 3 wherein said column elements (33) are four and are arranged on said bottom wall (31) in symmetrical positions with respect to the symmetry axes of said bottom wall (31).

5. Flush-mounting box (30) according to claim 3 or 4 wherein the lateral projections (35) of each of said column elements (33) are four, are in the shape of fins and are cross-like arranged.

6. Flush-mounting box (30) according to one of the claims from 3 to 5 wherein each of said column elements (33) has an internally threaded central bush portion (38), and wherein each of said spacer elements (34) has a through-central portion (42) from which peripheral portions extend, in said peripheral portions said first (36) and said second (37) seats being made.

7. Flush-mounting box (30) according to one of the preceding claims wherein said plurality of support elements (33, 43) comprises a plurality of corner elements (43) .

8. Flush-mounting touch screen assembly comprising:
- a touch screen device (20) which comprises, in turn, a display screen (21) directly or indirectly associated with a casing (24);
- a flush-mounting box (30) according to one of the preceding claims;
- a bracket (40) adapted to be coupled, in a mounted configuration, with said flush-mounting box (30) and said touch screen device (20).

9. Flush-mounting touch screen assembly according to claim 8 wherein said bracket (40) is provided with a plurality of clip elements (44) and, in corresponding positions, said casing (24) of said touch screen device (20) has a plurality of engagement seats, said clip elements (44) and said engagement seats being arranged to engage into each other.

10. Flush-mounting touch screen assembly according to claim 9 wherein each of said clip elements (44) has two fins (45) provided with serrated teeth adapted to make the snap engagement in said engagement seats.

## Patentansprüche

1. Einbaudose (30) für Berührungsbildschirmvorrichtungen, die zur Einbaumontage in eine Wand angepasst ist und eine Bodenwand (31) und Seitenwände (32) aufweist, die ein Dosenvolumen definieren, wobei die Bodenwand (31) eine Vielzahl von Halterungselementen (33, 43) aufweist, die sich freitragend in Bezug auf die Bodenwand (31) innerhalb des Dosenvolumens erstrecken, wobei die Halterungselemente (33, 43) eine erste Stützebene für eine Halterung (40) für die Installation einer Berührungsbildschirmvorrichtung definieren, wobei die Einbaudose (30) eine Vielzahl von Abstandshalterelementen (34) umfasst, die abnehmbar mit der Einbaudose (30) verbunden sind, wobei die Abstandhalterelemente (34) abnehmbar mit der Bodenwand (31) verbunden sind, wobei die Einbaudose (30) **dadurch gekennzeichnet ist, dass** die Abstandshalterelemente (34) so angeordnet sind, dass sie über entsprechenden Halterungselementen (33, 43), die eine zweite Stützebene definieren, die parallel zu und in einem vorbestimmten Abstand von der ersten Stützebene angeordnet ist, ergriffen und anschließend reversibel verbunden werden.

2. Einbaudose (30) nach Anspruch 1, wobei die Abstandhalterelemente (34) so geformt sind, dass sie mit den Halterungselementen (33, 43) gemäß mindestens zwei alternativen Kopplungspositionen gekoppelt werden können, wobei die Abstandhalterelemente (34) zwei jeweilige Abstände mit unterschiedlichen vordefinierten Längen zwischen der ersten Stützebene und der zweiten Stützebene definieren.

3. Einbaudose (30) nach einem der vorhergehenden Ansprüche, wobei die Vielzahl von Halterungselementen (33, 43) mindestens zwei Säulenelemente (33) umfasst, von denen jedes mit einer Vielzahl von seitlichen Vorsprüngen (35) versehen ist, jedes Abstandhalterelement (34) der Abstandhalterelemente (34) eine Vielzahl von ersten Sitzen (36) und eine Vielzahl von zweiten Sitzen (37) gegenüber den ersten Sitzen (36) aufweist, wobei die ersten Sitze (36) und die zweiten Sitze (37) so angeordnet sind, dass sie mit jeweiligen seitlichen Vorsprüngen (35), die eine erste Kopplungsposition bzw. eine zweite Kopplungsposition definieren, reversibel in Eingriff gebracht werden können.

4. Einbaudose (30) nach Anspruch 3, wobei die Säulenelemente (33) vier sind und an der Bodenwand (31) in symmetrischen Positionen in Bezug auf die Symmetrieachsen der Bodenwand (31) angeordnet sind.

5. Einbaudose (30) nach Anspruch 3 oder 4, wobei die seitlichen Vorsprünge (35) jedes der Säulenelemente (33) vier sind, die die Form von Rippen haben und kreuzförmig angeordnet sind.

6. Einbaudose (30) nach einem der Ansprüche 3 bis 5, wobei jedes der Säulenelemente (33) einen mit Innengewinde versehenen zentralen Buchsenabschnitt (38) aufweist, und wobei jedes der Abstandhalterelemente (34) einen durchgehenden zentralen Abschnitt (42) aufweist, von dem aus sich Umfangsabschnitte erstrecken, wobei in den Umfangsabschnitten die ersten (36) und die zweiten (37) Sitze ausgebildet sind.

7. Einbaudose (30) nach einem der vorhergehenden Ansprüche, wobei die Vielzahl von Halterungselementen (33, 43) eine Vielzahl von Eckelementen (43) umfasst.

8. Einbau-Touchscreen-Baugruppe, bestehend aus:
- einer Touchscreen-Vorrichtung (20), die ihrerseits einen Anzeigebildschirm (21) umfasst, der direkt oder indirekt mit einem Gehäuse (24) verbunden ist;
- einer Einbaudose (30) nach einem der vorhergehenden Ansprüche;
- einer Halterung (40), die geeignet ist, in einer montierten Konfiguration mit der Einbaudose (30) und der Touchscreen-Vorrichtung (20) gekoppelt zu werden.

9. Einbau-Touchscreen-Baugruppe nach Anspruch 8, wobei die Halterung (40) mit einer Vielzahl von Clipelementen (44) versehen ist und das Gehäuse (24) der Touchscreen-Vorrichtung (20) in entsprechenden Positionen eine Vielzahl von Eingriffssitzen aufweist, wobei die Clipelemente (44) und die Eingriffssitze so angeordnet sind, dass sie ineinander eingreifen.

10. Einbau-Touchscreen-Baugruppe nach Anspruch 9, wobei jedes der Clipelemente (44) zwei Rippen (45) aufweist, die mit gezackten Zähnen versehen sind, welche geeignet sind, den Schnappeingriff in den Eingriffssitzen herzustellen.

## Revendications

1. Boîte à montage encastré (30) pour dispositifs à écran tactile adaptée pour être montée par encastrement dans un mur et comportant une paroi inférieure (31) et des parois latérales (32) qui définissent un volume de boîte, ladite paroi inférieure (31) comportant une pluralité d'éléments de support (33, 43) s'étendant en porte-à-faux par rapport à ladite paroi inférieure (31) à l'intérieur dudit volume de boîte, lesdits éléments de support (33, 43) définissant un premier plan de support pour un support (40) pour l'installation d'un dispositif à écran tactile, ladite boîte à montage encastré (30) comprenant une pluralité d'éléments d'écartement (34) couplés de manière amovible à ladite boîte à montage encastré (30), lesdits éléments d'écartement (34) étant couplés de manière amovible à ladite paroi inférieure (31), ladite boîte à montage encastré (30) étant **caractérisée en ce que** lesdits éléments d'écartement (34) sont agencés pour être saisis et subséquemment couplés de manière réversible au-dessus d'éléments de support (33, 43) respectifs définissant un second plan de support parallèle et placé à une distance prédéterminée par rapport audit premier plan de support.

2. Boîte à montage encastré (30) selon la revendication 1, dans laquelle lesdits éléments d'écartement (34) sont profilés de manière à pouvoir être couplés auxdits éléments de support (33, 43) selon au moins deux positions de couplage alternatives dans lesquelles lesdits éléments d'écartement (34) définissent deux distances respectives de deux longueurs prédéfinies différentes entre ledit premier plan de support et ledit second plan de support.

3. Boîte à montage encastré (30) selon une des revendications précédentes, dans laquelle ladite pluralité d'éléments de support (33, 43) comprend au moins deux éléments de colonne (33) chacun desquels est muni d'une pluralité de saillies latérales (35), chaque élément d'espacement (34) of lesdits éléments d'écartement (34) comporte une pluralité de premiers sièges (36) et une pluralité de seconds sièges (37) opposés auxdits premiers sièges (36), lesdits premiers sièges (36) et lesdits seconds sièges (37) étant agencés pour être engagés de manière réversible avec des saillies latérales (35) respectives définissant respectivement une première position de couplage et une seconde position de couplage.

4. Boîte à montage encastré (30) selon la revendication 3, dans laquelle lesdits éléments de colonne (33) sont quatre et sont agencés sur ladite paroi inférieure (31) dans des positions symétriques par rapport aux axes de symétrie de ladite paroi inférieure (31).

5. Boîte à montage encastré (30) selon la revendication 3 ou 4, dans laquelle les saillies latérales (35) de chacun desdits éléments de colonne (33) sont quatre, sont sous la forme d'ailettes et sont agencées en croix.

6. Boîte à montage encastré (30) selon une des revendications 3 à 5, dans laquelle chacun desdits éléments de colonne (33) comporte une partie de manchon centrale filetée intérieurement (38), et dans laquelle chacun desdits éléments d'écartement (34) comporte une partie centrale passante (42) à partir de laquelle s'étendent des parties périphériques, lesdits premiers (36) et seconds (37) sièges étant réalisés dans lesdites parties périphériques.

7. Boîte à montage encastré (30) selon une des revendications précédentes, dans laquelle ladite pluralité d'éléments de support (33, 43) comprend une pluralité d'éléments de coin (43) .

8. Ensemble à écran tactile pour montage encastré comprenant :
- un dispositif à écran tactile (20) qui comprend, à son tour, un écran d'affichage (21) associé directement ou indirectement à un boîtier (24);
- une boîte à montage encastré (30) selon une des revendications précédentes;
- un support (40) adapté pour être couplé, dans une configuration montée, avec ladite boîte à montage encastré (30) et ledit dispositif à écran tactile (20).

9. Ensemble à écran tactile pour montage encastré selon la revendication 8, dans lequel ledit support (40) est muni d'une pluralité d'éléments d'attache (44) et, dans des positions correspondantes, ledit boîtier (24) dudit dispositif à écran tactile (20) comporte une pluralité de sièges d'engagement, lesdits éléments d'attache (44) et lesdits sièges d'engagement étant agencés pour s'engager les uns dans les autres.

10. Ensemble à écran tactile pour montage encastré selon la revendication 9, dans lequel chacun desdits éléments d'attache (44) comporte deux ailettes (45) munies de dents dentelées adaptées pour réaliser l'encliquetage dans lesdits sièges d'engagement.
